Europäisches Patentamt

(19) European Patent Office

Office européen des brevets

(11) Veröffentlichungsnummer: **0 148 882**
**B1**

(12) # EUROPÄISCHE PATENTSCHRIFT

(45) Veröffentlichungstag der Patentschrift:
16.12.87

(51) Int. Cl.⁴: **C 03 B 40/02,** C 03 B 9/48, C 03 B 11/08

(21) Anmeldenummer: 84902504.4

(22) Anmeldetag: 08.06.84

(86) Internationale Anmeldenummer:
PCT/DE 84/00128

(87) Internationale Veröffentlichungsnummer:
WO 85/00162 (17.01.85 Gazette 85/02)

(54) **HOCHTEMPERATURBESTÄNDIGER WERKSTOFF FÜR VORRICHTUNGEN ZUM AUSFORMEM VON AUS GLAS BESTEHENDEN OPTISCHEN BAUELMENTEN HOHER OBERFLÄCHENGÜTE.**

(30) Priorität: 23.06.83 DE 3322523

(43) Veröffentlichungstag der Anmeldung:
24.07.85 Patentblatt 85/30

(45) Bekanntmachung des Hinweises auf die Patenterteilung:
16.12.87 Patentblatt 87/51

(84) Benannte Vertragsstaaten:
BE DE FR GB NL SE

(56) Entgegenhaltungen:
EP-A-0 040 875
FR-A-2 202 051
GB-A-2 021 095
US-A-3 141 756
US-A-3 983 293

(73) Patentinhaber: ERNST LEITZ WETZLAR GMBH,
Ernst- Leitz- Strasse 30 Postfach 20 20, D-6330
Wetzlar 1 (DE)

(72) Erfinder: FRANEK, Henning, Mühlenkopfstrasse 5,
D-6333 Braunfels- Tiefenbach (DE)
Erfinder: BRÖMER, Heinz, Hundsrück 7, D-6330
Wetzlar 26 (DE)
Erfinder: DEUTSCHER, Klaus, Lerchenweg 20,
D-6330 Wetzlar 1 (DE)

EP 0 148 882 B1

### Beschreibung

Die Erfindung betrifft einen anorganischen, thermisch resistenten Werkstoff für Vorrichtungen zum Formen von aus optischem Glas bestehenden Bauelementen, die aufgrund der Genauigkeit und der Güte der Formfläche nach dem Formprozeß ohne weitere Oberflächenbehandlung - wie Schleifen und/oder Polieren - benutzt werden können.

Die Fertigung optischer Bauelemente aus Glas ist ein mehrstufiger Prozeß, der hohe Genauigkeiten verlangt. Neben der Herstellung der geometrischen Form, z. B. von gekrümmten Flächen mit bestimmten vorgegebenen Radien und deren Zentrierung, müssen die Flächen frei von Oberflächenfehlern, wie Kratzern, Riefen, etc., sein. Die Flächen müssen "auspoliert" sein. Diese Prozesse sind zeit- und kostenaufwendig.

Um den Schleif- oder Fräsvorgang an optischen Elementen (Linsen, Prismen, Spiegeln, Platten) abzukürzen stellt man Glaspresslinge her, deren Abmaße mit einem entsprechenden Übermaß dem optischen Fertigteil entsprechen. Diese Formkörper werden aus Glas bei so hohen Temperaturen gepreßt, daß das Glas zähplastisch ist. Als Formteile werden warmfeste, zunderfreie Metallegierungen verwendet.

Die auf diese Weise hergestellten Preßlinge haben eine mehr oder weniger matte Oberfläche, die von der Reaktion des Glases mit dem Stempelmaterial und von dem während des Prozesses verwendeten pulvrigen Trennmittel zwischen Glasfläche und anderen Berührungsflächen herrührt. Diese Preßlinge müssen dann in konventioneller Art und Weise geschliffen und poliert werden.

Durch entsprechende, feine Gestaltung der Formflächen gelingt es, Linsen mit einer Oberfläche zu pressen, die im Beleuchtungsstrahlengang optischer Geräte Verwendung finden können. Deren Oberflächen weisen aber im Mikrobereich noch so viele Fehler auf ("Apfelsinenhauteffekt"), daß Linsen, die auf diese Weise hergestellt sind, für die Verwendung in einem optischen Abbildungsstrahlengang nicht geeignet sind.

Als Verbesserung wird in den US-Patentschriften 3 900 328, 3 833 347 und 3 844 755 die Verwendung von Glaskohlenstoff an den Formflächen vorgeschlagen. Die durch Stempel mit Formflächen aus Glaskohlenstoff hergestellten optischen Flächen sind in der Tat von wesentlich besserer Qualität. Allerdings unterliegt Glaskohle der Oxidation und hat auch sonst nachteilige Eigenschaften.

Aus der US-PS-3 141 756 ist ein Glasformungs-Element, z. B. ein Tiegel, ein Stempel oder eine Rolle für die Herstellung von Flachglas, bekannt. Dieses Element weist an denjenigen Stellen, an welchen es mit der Glasschmelze in Berührung kommt, eine spezielle Beschichtung auf. Die anorganischen Schichtmaterialien sind Zirkonoxid oder Aluminiumoxid, die zur Umhüllung von aufgebrachten Metallpartikeln dienen. Diese kombinierte Beschichtungsstruktur soll als permanente Wärmeschutzschicht wirken. Der Obergriff des Anspruch 1 ist aus dieser Druckschrift bekannt.

Eine weitere Verbesserung ist in der DE-OS-26 39 259 vorgeschlagen. Der die Formflächen bildende Werkstoff besteht hier aus Siliziumkarbid (SiC) oder aus Siliziumnitrid ($Si_3N_4$). Allerdings haben auch solche Materialien erhebliche Nachteile. SiC wie auch $Si_3N_4$ sind bei höherer Temperatur empfindlich gegen Sauerstoff und Wasserdampf. Die Materialien können sich gemäß folgender Reaktionsgleichung zersetzen:

$$SiC + 2O_2 \rightarrow SiO_2 + CO_2$$

und Siliziumkarbid und Wasser gehen gemäß:

$$SiC + 2H_2O \rightarrow SiO_2 + CH_4$$

über in Siliziumdioxid und Methan.

Diese Reaktionen erfolgen zunächst zumeist oberflächlich und führen dazu, daß sich die genannten Materialien dann mit einer $SiO_2$-Schutzschicht überziehen. Bei Dauerbelastung bei hohen Temperaturen schreitet die Reaktionsfront in das Volumen des Materials hinein, wodurch es zu einer Volumenvergrößerung kommt und sich das SiC bzw. das $Si_3N_4$ zersetzt und als Staub zerrieselt.

Neben der Reaktion mit dem Luftsauerstoff und dem Wasser muß das Material der Formfläche auch dem Angriff der Glasschmelze widerstehen. Im allgemeinen kann der Grundsatz gelten, daß ein Formwerkzeug sich um so widerstandsfähiger erweist, je kleiner das chemische Reaktionsgefälle zwischen dem erweichten Glas und dem Formmaterial ist. Reaktionen zwischen erweichten Gläsern bzw. Glasschmelzen und Preßwerkzeugoberflächen können bereits bei einfacher Berührung auftreten. Man bezeichnet sie als Kontaktreaktion. Nach dem Verhalten bei Kontaktreaktionen kann man folgende drei Werkstoffgruppen unterscheiden:

1. Saure Gruppe:.
Hierzu gehören Werkstoffe aus $SiO_2$, aber auch aus Siliziumkarbid und Siliziumnitrid.

2. Basische Gruppe.:
Hierbei handelt es sich um Keramik aus CaO und/oder MgO.

3. Kontaktindifferente Gruppe:.
Hierzu gehören Kohlenstoff bzw. Glasierkohlenstoff.

Es ist nahezu unmöglich, Materialien der "sauren Gruppe" mit Materialien der basischen Gruppe zu kontaktieren, ohne daß Zerstörungen durch Kontaktreaktionen auftreten. Glasschmelzen, insbesondere solche, die für optische Zwecke Verwendung finden, sind äußerst unterschiedlich in ihren chemischen Zusammensetzungen, d.h. sie können sowohl sauren, als auch basischen Charakter aufweisen.

Es ist daher die Aufgabe der vorliegenden Erfindung, die sich aus dem Chemismus bzw. der kristallographischen Konfiguration der bekannten Tiegelform-Werkstoffe und der jeweiligen Glasschmelze ergebenden chemischen Unverträglichkeiten und glastechnologischen Fertigungsnachteile zu vermeiden und zum Pressen von optischen Bauelementen aus Glas, die keiner weiteren Nachbehandlung mehr bedürfen, Werkstoffe aus derjenigen Materialgruppe auszuwählen, die als "kontaktindifferent" bzw. "kontaktinert" bezeichnet werden.

Die Aufgabe wird erfindungsgemäß dadurch gelöst, daß der Werkstoff bei einer Vorrichtung gemäß dem Oberbegriff des Hauptanspruches in monokristalliner Form vorliegt und eine Gitterenergie zwischen 9 und 16 MJ/Mol (Megajoule pro Mol) aufweist, und daß die ganze Ausform-Vorrichtung von dem Werkstoff gebildet wird. Nach einer vorteilhaften Ausführungsform der vorliegenden Erfindung ist das Metalloxid Aluminiumoxid ($Al_2O_3$) in seiner $\alpha$-Modifikation. Alternativ dazu können als Metalloxide Chromoxid ($Cr_2O_3$) oder Zirkonoxid ($ZrO_2$) eingesetzt werden. Darüber hinaus ist es auch möglich, daß das Metall-Doppeloxid ein Spinell mit der Summenformel $Me^{II}O \cdot Me_2^{III}O_3$ ist, wobei für das zweiwertige Metall ($Me^{II}$) gilt: Mg und/oder Zn und/oder Fe und/oder Mn und/oder Ni und/oder Cu und/oder Co, und wobei für das dreiwertige Metall ($Me^{III}$) gilt: Al und/oder Fe und/oder Cr und/oder Mn und/oder Co. Das Metall-Doppeloxid kann insbesondere ein Spinell der Zusammensetzung $MgAl_2O_4$ oder $NiAl_2O_4$ sein.

Als Mischkristall kann zweckmäßigerweise eine der Varietäten der $\alpha$-Modifikation des Aluminiumoxids ($\alpha$-$Al_2O_3$), nämlich der Saphir (($Al$, $Ti$, $Fe$)$_2O_3$) oder der Rubin (($Al$, $Cr$)$_2O_3$), verwendet werden. Außerdem ist es möglich, daß der Mischkristall aus einem Metalloxid und einem Metall-Doppeloxid zusammengesetzt ist, beispielsweise aus $\gamma$-$Al_2O_3$/$MgAl_2O_4$.

Es ist zweckmäßig, daß das Aluminiumoxid eine Reinheit von mindestens 97 % aufweist. Der erfindungsgemäße Werkstoff wird als Kompakt-Werkstoff eingesetzt.

Die für den (die) erfindungsgemäßen Werkstoff(e) vorgesehenen Ausgangsstoffe kommen z.T. als natürliche Mineralien in Edelsteinqualität vor, so z. B. der farblose Korund ($\alpha$-$Al_2O_3$), der blaue Saphir ($\alpha$-$Al_2O_3$ + Zusätze), der rote Rubin ($\alpha$-$Al_2O_3$ + Zusätze), der Baddeleyit ($ZrO_2$), der edle Spinell ($MgAl_2O_4$) und der Gahnit ($ZnAl_2O_4$). Andererseits sind sie nach bekannten Synthese-Verfahren in monokristalliner Form - also als relativ große Einkristalle herstellbar. So werden nach dem Flammenschmelzverfahren (Verneuil-Verfahren), das eine Zwischenstufe zwischen der Kristallzüchtung aus der Schmelze und aus der Dampfphase darstellt, erschmolzen: Rubin, Saphir, Korund, Rutil ($TiO_2$), Spinell, Chrysoberyll ($Al_2BeO_4$) u.a. Daneben sind auch Hydrothermalsyntheseverfahren zur Herstellung der Ausgangssubstanzen für den erfindungsgemäßen Werkstoff bekannt.

Es hat sich als notwendig erwiesen, die Formflächen der Ausform-Vorrichtung möglichst frei von werkstoffbedingten Mikrogefüge-Strukturen zu gestalten. Aus diesem Grunde wird erfindungsgemäß der "Einkristall", also der monokristalline Werkstoff, als Formwerkstoff vorgesehen, der keinerlei Kristallitkorngrenzen, Poren etc. aufweist.

Unter Mischkristallen werden solche Substanzen verstanden, die in das jeweilige Kristallgitter andere Ionen auf Gitterplätzen aufnehmen können, ohne dadurch die Kristallstruktur des reinen Ausgangskristalls zu verändern. Es handelt sich mithin um einen partiellen Gitterbaustein-Austausch unter Beibehaltung der ursprünglichen kristallgittergeometrischen Isomorphiebeziehungen. Unter Modifikationen werden Substanzen einundderselben chemischen Summenformel verstanden, die sich hinsichtlich ihrer Raumgitter - also auch ihrer Packungsdichte, ihrer physikalischen und chemischen Parameter usw. - unterscheiden (vgl. $\alpha$-, $\gamma$-$Al_2O_3$). Unter Varietäten versteht man spezielle, durch gezielte Dotierungen oder Verunreinigungen oder sonstige Gitterdefekte gekennzeichnete Kristall-Vertreter einundderselben Modifikation (z. B. Korund, Saphir, Rubin).

Es hat sich überraschenderweise herausgestellt, daß die Gitterenergie ein geeignetes Auswahlkriterium darstellt. Unter der Gitterenergie eines Kristalls versteht man den Energiebetrag, der aufzuwenden ist, um den Kristall in seine Bausteine zu zerlegen und diese ins Unendliche zu transportieren. Sie stellt für einen Kristall eine charakteristische Größe dar, die mit anderen Eigenschaften, wie Kompressibilität, thermische Ausdehnung, Schmelz- und Siedepunkt, Härte u.a., in engem Zusammenhang steht. Bei ihrer Berechnung, der der Born-Haber-Kreisprozeß zugrunde gelegt wird, geht man von den unterschiedlichen Bindungskräften (Bindungsarten zwischen den einzelnen Kristallbausteinen; Anziehungs- und Abstoßungskräfte) aus. Einige Beispiele für aus der Literatur bekannte, berechnete Gitterenergien, angegeben in Megajoule pro Mol, sind in der nachfolgenden Tabelle aufgeführt:

| | | | |
|---|---|---|---|
| $CeO_2$ | - | 9,6 | MJ/Mol |
| $ZrO_2$ | - | 11,2 | " |
| $TiO_2$ | - | 12,1 | " |
| $Y_2O_3$ | - | 12,7 | " |
| $GeO_2$ | - | 12,8 | " |
| $Fe_2O_3$ | - | 14,3 | " |
| $Cr_2O_3$ | - | 15,3 | " |
| $Ga_2O_3$ | - | 15,6 | " |
| $Al_2O_3$ | - | 15,9 | " |

Unter dem Begriff "hochtemperaturbeständiger Werkstoff" werden solche anorganischen, nichtmetallischen, oxidischen Verbindungen verstanden, deren Erweichungstemperatur oberhalb 1000°C, vorzugsweise oberhalb 1500°C, liegt. In der Keramik-Terminologie werden derartige Materialien als "feuerfest" bezeichnet; liegt ihr Erweichungspunkt gar oherhalb 1830°C, so nennt man sie "hochfeuerfest". Die ungefähren Schmelzpunkte einiger Ausgangssubstanzen sind nachfolgend angegehen:

| | | |
|---|---|---|
| $ThO_2$ | - | 3300°C |
| $MgO$ | - | 2800°C |
| $ZrO_2$ | - | 2690°C |
| $CaO$ | - | 2560°C |
| $BeO$ | - | 2530°C |
| $La_2O_3$ | - | 2300°C |
| $Cr_2O_3$ | - | 2270°C |
| $MgO \cdot Al_2O_3$ | - | 2120°C |
| $Al_2O_3$ | - | 2070°C |
| $NiO$ | - | 1980°C |
| $BeO \cdot Al_2O_3$ | - | 1910°C |
| $MnO$ | - | 1730°c |

Vergleicht man die erfindungsgemäßen Materialien mit bislang verwendeten Metall- oder Metallegierungen, so treten die Vorteile dieser hochresistenten, nichtmetallischen Werkstoffe klar hervor. Bei Formflächen aus Metallen bzw. Legierungen besteht die Gefahr, daß sich die Mikrostruktur des Gefüges abdrückt. Metallisches Gefüge besteht meistens aus dem Korn (aus Kristalliten) und den dazwischenliegenden Korngrenzen, in welche Beimengungen des Metalls eingehen. Dieses blanke, anfänglich oxidschichtfreie Gefüge bewirkt eine örtlich verschiedene Wärmeableitung, wodurch die Oberfläche in negativer Weise beeinflußt wird. Des weiteren neigen die meisten Metalle bei Temperaturdauerbeanspruchung zur Rekristallisation, d.h. zu einem bevorzugten Wachstum von größeren Kristallen auf Kosten von kleineren. Erst wenn nach einigem Gebrauch ein Oxidfilm auf der Formfläche gebildet ist, vermag dieser die Gefügekonturen zu verwischen. Die Formfläche hat dann die Höhe ihrer Gebrauchsfähigkeit erreicht. Das Ausmaß der Oxidschicht-Bildung ist jedoch abhängig vom Gleichgewicht zwischen Wärmezu- und -abfuhr durch den Glasposten bzw. von der Wärmeableitung durch das Formmaterial und von dem Lösungsvorgang zwischen dem Glas und der angrenzenden Fläche.

## Patentansprüche

1. Vorrichtung zum Ausformen von optischen Bauelementen hoher Oberflächengüte aus Glas, die mindestens eine Formfläche mit einer Oberflächenbeschaffenheit hoher Güte und Maßgenauigkeit aufweist, wobei der die Formfläche bildende hochtemperaturbeständige Werkstoff aus mindestens einem Metalloxid oder einem Metall-Doppeloxid oder einem Metalloxid-Mischkristall hoher Gitterenergie besteht, dadurch gekennzeichnet, daß der Werkstoff in monokristalliner Form vorliegt und eine Gitterenergie zwischen 9 und 16 MJ/Mol aufweist und daß die ganze Ausform-Vorrichtung von dem Werkstoff gebildet wird.

2. Vorrichtung nach Anspruch 1, dadurch gekennzeichnet, daß das Metalloxid Aluminiumoxid ($Al_2O_3$) in seiner α-Modifikation ist.

3. Vorrichtung nach Anspruch 1, dadurch gekennzeichnet, daß das Metalloxid Chromoxid ($Cr_2O_3$) ist.

4. Vorrichtung nach Anspruch 1, dadurch gekennzeichnet, daß das Metalloxid Zirkondioxid ($ZrO_2$) ist.

5. Vorrichtung nach Anspruch 1, dadurch gekennzeichnet, daß das Metall-Doppeloxid ein Spinell mit der Summenformel $Me^{II}O \cdot Me^{III}O_3$ ist, wobei für $Me^{II}$ gilt: Mg und/oder Zn und/oder Fe und/oder Mn und/oder Ni und/oder Cu und/oder Co, und wobei für $Me^{III}$ gilt: Al und/oder Fe und/oder Cr und/oder Mn und/oder Co.

6. Vorrichtung nach mindestens einem der Ansprüche 1 und 5, dadurch gekennzeichnet, daß das Metall-Doppeloxid ein Spinell der Zusammensetzung $MgAl_2O_4$ oder $NiAl_2O_4$ ist.

7. Vorrichtung nach mindestens einem der Ansprüche 1 und 2, dadurch gekennzeichnet, daß der Mischkristall eine der Varietäten der α-Modifikation des Aluminiumoxids (α-$Al_2O_3$), nämlich Saphir oder Rubin, ist.

8. Vorrichtung nach mindestens einem der vorherigen Ansprüche, dadurch gekennzeichnet, daß der Mischkristall aus einem Metalloxid und einem Metall-Doppeloxid zusammengesetzt ist.

9. Vorrichtung nach mindestens einem der vorherigen Ansprüche, dadurch gekennzeichnet, daß der Mischkristall aus $MgAl_2O_4/\gamma$-$Al_2O_3$ besteht.

10. Verwendung des Werkstoffs nach mindestens einem der vorherigen Ansprüche zur Beschichtung bzw. Auskleidung von Vorrichtungen zum Ausformen optischer Bauelemente.

## Claims

1. Device, for the moulding-to-shaps of optical components of high surface quality of glass, which displays at least one moulding surface with a surface property of high quality and dimensional accuracy, wherein the material, which forms the moulding surface and is resistant to high temperaturs, consists of at least one metallle oxids or one metal double-oxids or one metal oxids mixed crystal of high lattice energy, characterised thereby, that the material is present in monocrystalline form and displays a lattice energy between 9 and 16 mega-joules per molecule and that the entire moulding device is formed of the material.

2. Device according to claim 1, characterised thereby, that the metal oxide is aluminium oxide ($Al_2O_3$) in its α-modification.

3. Device according to claim 1, characterised thereby, that the metal oxide is chromium oxide ($Cr_2O_3$).

4. Device according to claim 1, characterised thereby, that the metal oxide is zirconium oxids ($ZrO_2$).

5. Device according to claim 1, characterised thereby, that the metal double-oxide is a spinel with the summation formula $Me^{II}O \cdot Me^{III}O_3$, wherein Mg and/or Zn and/or Fe and/or Mn and/or Ni and/or Cu and/or Co is valid for $Me^{II}$ and Al and/or Fe and/or Cr and/or Mn and/or Co is valid for $Me^{III}$.

6. Device according to at least one of the claims 1 and 8, characterised thereby, that the metal double-oxide is a spinel of the composition $MgAl_2O_4$ or $NiAl_2O_4$.

7. Device according to at least one of the claims 1 and 2, characterised thereby, that the mixed crystal is one of the varieties of the $\alpha$-modification of the aluminium oxide ($\alpha$-$Al_2O_3$), namely sapphire or ruby.

8. Device according to at least one of the preceding claims, characterissd thereby, that the mixed crystal is composed of a metal oxids and a metal double-oxids.

9. Device according to at least one of the preceding claims, characterised thereby, that the mixed crystal consists of $MgAl_2O_4$/$\gamma$-$Al_2O_3$.

10. Use of the material according to at least one of the preceding claims for the coating or lining of devices for the moulding-to-shape of optical components.

## Revendications

1. Dispositif de façonnage d'éléments de construction optiques de qualité de surface elevée en verre, qui présente au moins une surface de forme avec un état de surface de qualité et de précision dimensionnelle élevées, la matière à haute résistance thermique, formant la surface de forme, consistant en au moins un oxyde métallique ou un oxyde double métallique ou un cristal mixte d'oxyde métallique à haute énergie de liaison cristalline, caractérisé en ce que la matière se présente sous forme monocristalline at présente une énergie de liaison cristalline entre 9 et 16 MJ/Mol et en ce que le diepositif de façonnage entier est constitué par la matière.

2. Dispositif selon le revendication 1, caractérisé en ce que l'oxyde métallique est l'oxyde d'aluminium ($Al_2O_3$) dans sa variété $\alpha$.

3. Dispositif selon la revendication 1, caractérisé en ce que l'oxyde métallique est l'oxyde de chrome ($Cr_2O_3$).

4. Dispositif selon la revendication 1, caractérisé en ce que l'oxyde métallique est le dioxyde de zirconium ($ZrO_2$).

5. Dispositif selon la revendication 1, caractérisé en ce que l'oxyde double métallique est un spinelle de formule brute $Me^{II}O \cdot Me_2^{III}O_3$, auquel cas pour $Me^{II}$ est valable: Mg et/ou Zn et/ou Fe et/ou Mn et/ou Ni et/ou Cu et/ou Co et auquel cas pour $Me^{III}$ est valeble: Al et/ou Fe et/ou Cr et/ou Mn et/ou Co.

6. Dispositif selon au moins l'une des revendications 1 et 5, caractérisé en ce que l'oxyde double métallique est un spinelle de la composition $MgAl_2O_4$ ou $NiAl_2O_4$.

7. Dispositif selon au moins l'une des revendications 1 et 2, caractérisé en ce que le cristal mixte est l'une des variétés de la forme $\alpha$ de l'oxyde d'aluminium ($\alpha$-$Al_2O_3$), à savoir du saphir ou du rubis.

8. Dispositif selon au moins l'une des revendications précédentes, caractérisé en ce que le cristal mixte est composé d'un oxyde métallique et d'un oxyde double métallique.

9. Dispositif selon au moins l'une des revendications précédéntes, caractérisé en ce que la solution solide consiste en $MgAl_2O_4$/$\gamma$-$Al_2O_3$.

10. Utilisation de la matière selon au moins l'une des revendications précédentes pour le recouvrement en couche ou le revêtement de dispositifs pour le façannage d'éléments de construction optiques.